# EUROPEAN PATENT APPLICATION

(11) **EP 2 837 593 A1**
(43) Date of publication of application: **18.02.2015**
(21) Application number: 12872423.4
(22) Date of filing: 07.12.2012
(51) Int. Cl.: B82B 1/00, H01B 1/20, C08J 5/18

(54) **HIGHLY STRETCHABLE MATERIAL SHOWING STRETCHABILITY AT LEAST AS GREAT AS INTRINSIC LIMIT OF MATERIAL USING THREE-DIMENSIONAL NANOSTRUCTURE, AND PREPARATION METHOD THEREOF**

(30) Priority: 30.03.2012 KR 20120032794
(71) Applicant: Korea Advanced Institute of Science and Technology, Daejeon 305-701 (KR)
(72) Inventor: JEON, Seok Woo, Daejeon 305-701 (KR); PARK, Jun Yong, Seoul 138-916 (KR)
(74) Representative: Viering, Jentschura & Partner Patent- und Rechtsanwälte
(86) International application number: PCT/KR2012/010585
(87) International publication number: WO 2013/147389

(57) **Abstract**

The present invention provides a three-dimensional nanostructured porous stretchable polymer and a preparation method thereof, wherein nanopores of 1-2,000 nm having a regular or irregular shape in each axis direction are three-dimensionally connected to each other or are partially connected to each other inside a porous polymer material having a porous three-dimensional nanostructure, a periodic three-dimensional porous nanostructured pattern is formed by the nanopores and the material having a porous nanostructure, and it is possible to implement high stretchability at least as great as the stretching limit of a polymer bulk material through stress dispersion by the three-dimensional porous nanostructured pattern.

## Description

### CROSS-REFERENCE TO RELATED APPLICATION

This application claims priority under 35 USC § 119 to Korean Patent Application No. 10-2012-0032794filed on March30, 2012in the Korean Intellectual Property Office (KIPO), the entire disclosure of which is herein incorporated by reference.

### BACKGROUND

### 1. Field

Example embodiments of the present invention relate to highly stretchable materials beyond intrinsic limits using three-dimensional nanostructures. More particularly, example embodiments of the present invention relate to three-dimensional nano-structured porous stretchable polymer materials beyond intrinsic stretch limits through a stress dispersion effect by three-dimensional porous nanostructure pattern, and fabrication methods thereof.

### 2. Description of the Related Art

Stretchable materials have been developed into many unconventional applications such as an electronic-eye camera, an artificial skin, an actuator, etc. An important technical issue in these applications is to enhance stretch limits of commonly used materials compatible with conventional processes and devices. Typically, mechanical properties of bulk materials are determined by intrinsic properties of the materials such as Young's modulus, Poisson's ratio, etc. The intrinsic properties may be already determined when the materials are synthesized, and thus it is technically advantageous to improve the properties of the materials by a post-treatment without a replacement of the materials. Recently, methods of improving intrinsic stretch limits of the bulk materials through a structural modification have been researched, and these may be categorized into two approaches.

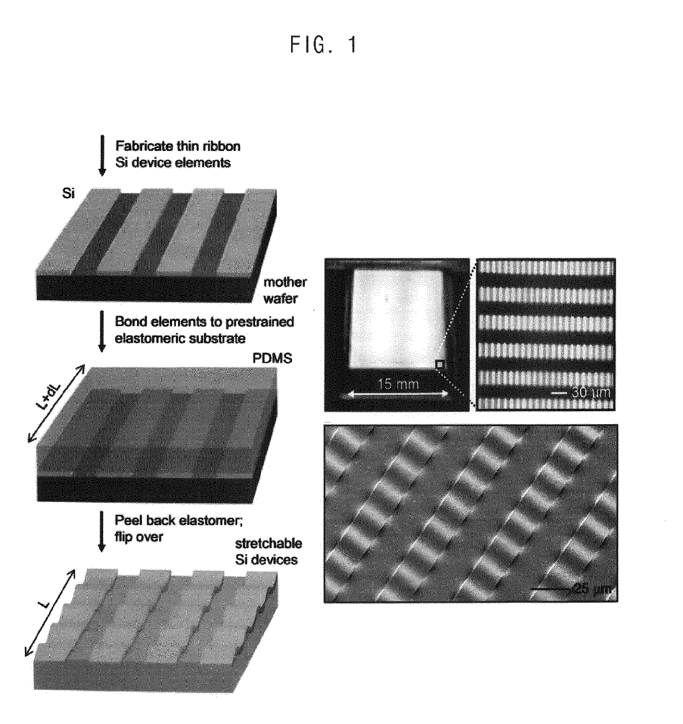

First, the bulk material may be transformed into a periodic wave form as an accordion bellow. In this approach, an inorganic thin layer such as silicon or semiconductor compounds may be combined with a silicon-based elastic substrate, and then recovered into an original state. As a result, an upper conductive thin layer may be compressed to form the periodic wave form (see Science, 321, 1468-1472, 2008, FIG. 1). A stretch transformation limit may be enhanced by about 100% through this method. However, a different substrate, i.e., the elastic substrate is involved, and thus a deformation of materials may be caused in a larger transformation. Further, it may not be compatible with conventional 2-dimensional device.

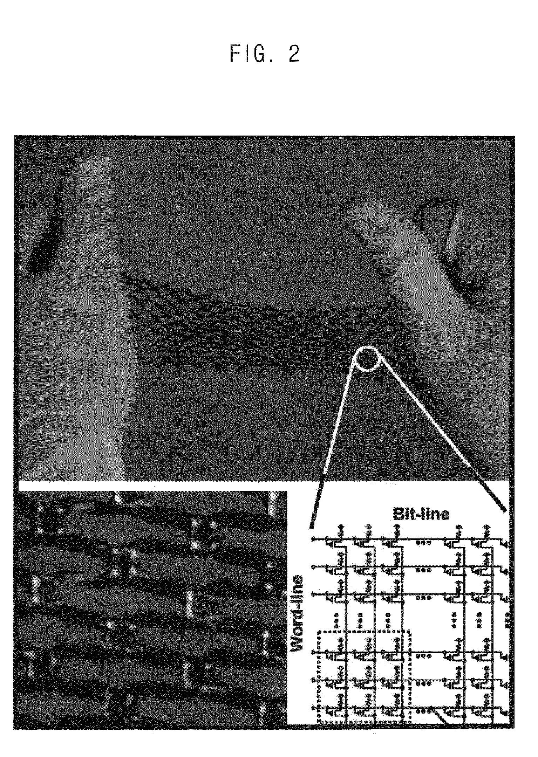

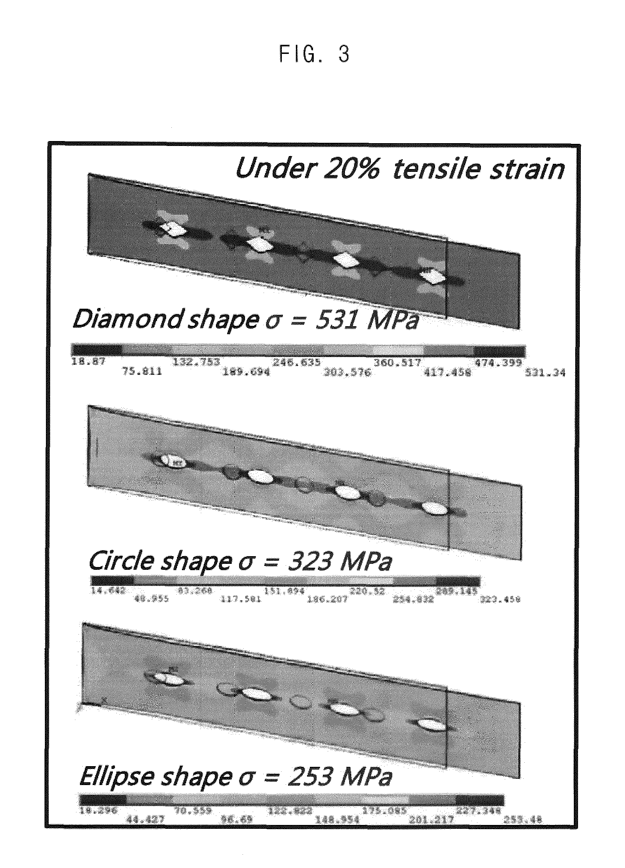

Another approach includes a periodic perforation on a conductive complex layer using, e.g., a punch(see P. Natl. Acad. Sci. USA, 102, 12321-12325, 2005, FIG. 2). A stress generated during a stretch transformation may be dispersed throughout a material by the periodic perforation to improve the stretch limit (see Nature Nanotech. 5, 853-857, 2010, FIG. 3). However, a critical size of the perforation may be within several millimeters and a 2-dimensional arrangement of the perforation is only obtained. Thus, a density or the number of the perforation is limited, and the stretch limit may be enhanced only by about 60%.

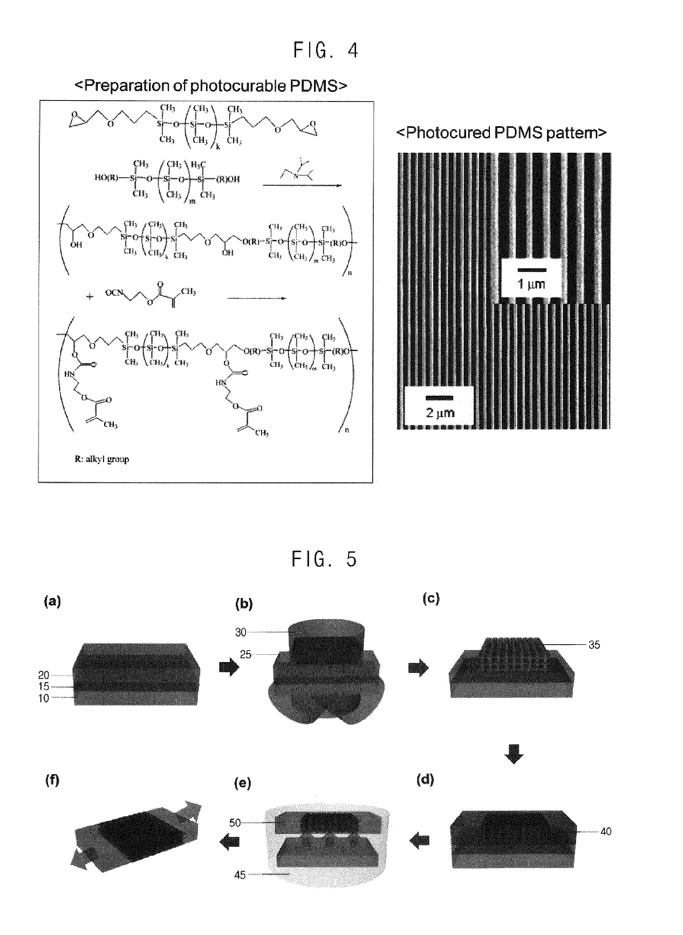

Additionally, a stretchable nanostructure of a sub-micron scale through a photopatterning using a photo-curable PDMS has been researched (see J. Am. Chem. Soc. 125, 4060-4061, 2003, FIG. 4). However, a manufacture of a 2-dimensional stretchable nanostructure is only disclosed, and a stretchable material having a 3-dimensional porous periodic nanostructure pattern has not been yet researched or recognized.

### SUMMARY

Example embodiments of the present invention provide a highly stretchable material and a fabrication method thereof throughout a 3-dimensinal nano-structured bulk material, and provide an application of the highly stretchable material in an electronic device.

According to an aspect of the present inventive concepts, there is provided a 3-dimensional nano-structured porous stretchable polymer material. In the 3-dimensional nano-structured porous stretchable polymer material, nano-size pores having regular or irregular shapes in an axis direction thereof in a polymer material having a porous 3-dimensional nanostructure are 3-dimensionally connected or partially connected to each other to form a channel. A periodic 3-dimensional porous nanostructure pattern is formed by the nano-size pores and the material having the porous nanostructure. A stretchable property beyond a stretch limit of a bulk material is achieved through a stress dispersion effect by the 3-dimensional porous nanostructure pattern.

According to an aspect of the present inventive concepts, there is provided a fabrication method of a stretchable polymer material as follows:
(a) spin coating a photoresist on a substrate and thermally vaporizing a solvent;
(b) forming a periodic 3-dimensional porous nanostructure pattern from the photoresist by a proximity field nano-patterning method;
(c) impregnating a liquid-state elastomer between pores using the photoresist including the periodic 3-dimensional porous nanostructure pattern as a template;
(d) removing the template by an organic solvent to obtain a 3-dimensional nano-structured porous stretchable polymer material that has a inverse form of the 3-dimensional porous nanostructure pattern formed in the photoresist; and
(e) separating the porous stretchable polymer material from the organic solvent and performing a drying process.

According to an aspect of the present inventive concepts, there is provided an electronic material comprising the 3-dimensional nano-structured porous stretchable polymer material.

According to an aspect of the present inventive concepts, there is provided astretchable conductor including a 3-dimensional nano-structured porous polymer material. In the stretchable conductor, nano-size pores having regular or irregular shapes in an axis direction thereof in a polymer material having a porous 3-dimensional nanostructure are 3-dimensionally connected or partially connected to each other to form a channel. A periodic 3-dimensional porous nanostructure pattern is formed by the nano-size pores and the material having the porous nanostructure. A stretchable property beyond a stretch limit of a bulk material is achieved through a stress dispersion effect by the 3-dimensional porous nanostructure pattern.

According to an aspect of the present inventive concepts, there is provided a stretchable magnetic material including a 3-dimensional nano-structured porous polymer material. In the stretchable magnetic material, nano-size pores having regular or irregular shapes in an axis direction thereof in a polymer material having a porous 3-dimensional nanostructure are 3-dimensionally connected or partially connected to each other to form a channel. A periodic 3-dimensional porous nanostructure pattern is formed by the nano-size pores and the material having the porous nanostructure. A stretchable property beyond a stretch limit of a bulk material is achieved through a stress dispersion effect by the 3-dimensional porous nanostructure pattern.

### BRIEF DESCRIPTION OF THE DRAWINGS

Example embodiments will be more clearly understood from the following detailed description taken in conjunction with the accompanying drawings.
FIG. 1 is an image illustrating a conventional method of enhancing a stretch property and a silicon structure in which a thin wave inorganic layer is formed on an elastic substrate;
FIG. 2 is an image illustrating a conventional method of enhancing a stretch property and an electronic device in which a conductive polymer including periodic perforation is used;
FIG. 3 shows a simulation result of a stress dispersion effect by a formation of a periodic perforation obtained from a finite element analysis;
FIG. 4 illustrates a synthesis route of a conventional photo-curable PDMS and a SEM image of a photo-cured 2-dimensional PDMS pattern;
FIG. 5 is a schematic view illustrating a fabrication method of a 3-dimensional nano-structured highly stretchable material in accordance with example embodiments;
FIG. 6 includes SEM images and an 3-dimensional simulation image showing a 3-dimensional nano-structure of a positive tone photoresist obtained by a proximityfieldnano-patterning technology;
FIG. 7 includes an image and an SEM image showing PDMS having 3-dimensional porous nano-structure patterns formed by an impregnation;
FIG. 8 illustrates a preparation process of a 3-dimensional conductive PDMS formed by an impregnation;
FIG. 9 is a graph showing a preparation process of a 3-dimensional PDMS in the present invention, and a thickness of a PDMS thin layer according to a spin rate of a spin coating process;
FIG. 10 includes graphs showing tensile failure transformation ratios of a 3-dimensional nano-structured PDMS and a conventional solid PDMS (sections (a) and (a')), and graphs showing enhancement degrees of tensile failure transformation ratios in a 3-dimensional nano-structured PDMS and a conventional solid PDMS (sections (b) and (b'));
FIG. 11 is a graph showing a tensile strain transformation ratio of a conventional bulk solid PDMS according to a curing temperature;
FIG. 12 includes images showing tensile strained forms of a 3-dimensional nano-structured PDMS cured at a room temperature;
FIG. 13 includes a schematic view of a preparation method of a 3-dimensional nano-structured highly stretchable material of which a 2-dimensional cross-section may have any form, and images of the highly stretchable material prepared therefrom in accordance with other example embodiments;
FIG. 14 includes a graph showing a conductivity change according to a tensile strain of a stretchable conductor using the 3-dimensional nano-structured highly stretchable material of the present invention (section (a)), and a graph showing a conductivity change according to the number of repeated stretch cycles of the stretchable conductor using the 3-dimensional nano-structured highly stretchable material of the present invention;
FIG. 15 is a graph showing conductivity changesaccording to tensile strains of the 3-dimensional nano-structured highly stretchable conductor of the present invention and a conventional stretchable conductor complex;
FIG. 16 illustrates a stretchable LED device manufactured using the 3-dimensional nano-structured highly stretchable conductor; and
FIG. 17 includes images showing other application examples of the present invention.

### DETAILED DESCRIPTION OF THE EMBODIMENTS

Various exemplary embodiments will be described more fully, in which some exemplary embodiments are shown. The present inventive concept may, however, be embodied in many different forms and should not be construed as limited to the exemplary embodiments set forth herein. Rather, these exemplary embodiments are provided so that this description will be thorough and complete, and will fully convey the scope of the present inventive concept to those skilled in the art.

The present invention provides a novel material of which a stretch limit may be remarkably enhanced through a 3-dimensional nano-structured bulk material.

More particularly, nano-size pores ranging from about 1 to about 2,000 nm having regular or irregular shapes in an axis direction thereof may be connected or partially connected to each other in a porous polymer material having a 3-dimensional nanostructure to form a channel. The nano-size pores and the porous nanostructure may form a periodic 3-dimensional porous nanostructure pattern. Thus, in the present invention, a 3-dimensional nano-structured porous stretchable polymer material which is highly stretchable beyond a stretch limit of a polymer bulk material through a stress dispersion effect by the 3-dimensional porous nanostructure pattern may be provided.

The term "periodic 3-dimensional porous nanostructure pattern" refers to a 3-dimensinol network structure formed by nanosize pores and a porous nano-structured material, in which the nanosize pores of about 1 to 2,000 nm having a regular or irregular shape in an axis direction thereof may be 3-dimensionally connected or partially connected to form a channel. The 3-dimensinoal network structure may be repeated periodically.

In the present invention, a particular method of achieving the periodic 3-dimensional porous nanostructure pattern may include a proximityfieldnano-patterning technology, in which a photopolymerizable polymer including a photoresist may be formed to have a periodic 3-dimensional porous nanostructure pattern.

The proximity field nano-patterning technology is very suitable for obtaining the periodic porous nanostructure pattern and may include the following elements.

1) A light source having a substantially coherence electromagnetic radiation and having any wavelength capable of generating a chemically and/or physically modified region of a photosensitive material.

2) A mask element such as a elastomer phase mask for creating a desired 3-dimensional interference pattern in a photosensitive material, which generates a plurality of the substantially coherence electromagnetic radiation to cause an optical interference in the photosensitive material, thereby forming an optical interference pattern that has a selected spatial distribution intensity and a polarized state.

3) A photosensitive material including a material that is photo-polymerized when absorbing an electromagnetic radiation such as a photo-polymerization precursor, wherein the photosensitive material is chemically and/or physically modified by an exposure to the electromagnetic radiation, so that the material may be chemically etched or may not be chemically etched, or the material may become soluble or insoluble to a chemical reagent such as a solvent.

An exemplary photosensitive material may include at least one type of a photoinitiator that may trigger chemical or physical modification in the photosensitive material by absorbing the electromagnetic radiation.

In the proximity field nano-patterning technology, at least one contact surface between the mask element and the photosensitive material may form the 3-dimensional porous nanostructure pattern through a conformal contact, preferably an atomic scale (< 5 nm) conformal contact.

The conformal contact may be provided by placing at least a portion of the mask element (or a coating thereon) adjacent to the photosensitive material sufficiently to generate an intramolecular attraction force such as van der Waals force. The conformal contact may mean a contact between surfaces and/or coated surfaces and may facilitate an alignment of the mask element and the photosensitive material.

For example, in the conformal contact, at least one contact surface of the mask element such as the phase mask may be macroscopically associated with a whole surface of the photosensitive material such as planar, smooth, rough, contoured, convex or concave surfaces.

In other embodiments, in the conformal contact, at least one contact surface of the mask element such as the phase mask may be macroscopically associated with a whole surface of the photosensitive material to create an intimate contact without an empty space.

In an embodiment, the mask element of the present invention may form the conformal contact with at least one planar surface of the photosensitive material. Optionally, the mask element of the present invention may form the conformal contact with at least one contoured surface of the photosensitive material such as curved, convex or concave surfaces, or a surface having an embossing, e.g., a protrusion or channel.

The mask element including a material that may have a flexibility and a low modulus such as an elastomer may conform at least a portion of the surface of the photosensitive material, and thus may be advantageous to form a 3-dimensional structure on the contoured surface.

In a manufacture process of the 3-dimensional structure requiring high pattern accuracy and resolution, the conformal contact between the mask element and the photosensitive material may provide a useful method for a selected optical alignment of the elements. The use of the mask element that may make the conformal contact with the surface of the photosensitive material may provide the optical alignment in a vertical direction (i.e., a direction parallel to an axis of an electromagnetic radiation beam injected on the mask element) with a nano-scale accuracy.

The 3-dimensional porous nanostructure pattern obtained according to present invention may be selected by choosing a physical scale and/or an optical property of the mask element.

The periodic 3-dimensional porous nanostructure pattern by the proximityfieldnano-patterning technology of the present invention may be formed by process as follows:

1)Providing a substantial coherence electromagnetic radiation beam;

2) Radiating the substantial coherence electromagnetic radiation beam on a mask element that forms a conformal contact with a photosensitive material, wherein the mask element creates a plurality of electromagnetic radiation beams thereby to form an optical interference pattern in the photosensitive material, and an interaction between the electromagnetic radiation and the photosensitive material forms a chemically modified region in the photosensitive material; and

3) Removing at least a portion of the chemically modified region in the photoresist material or at least a portion of the photosensitive material that is not chemically modified to form the 3-dimensional nanostructure.

In this case, a phase mask including a material that may have a flexibility and a low modulus such as an elastomer may be used as the mask element. When the mask element contacts the photosensitive material such as a thin solid film of a photopolymer, a surface force generated from, e.g., a van der Waals-type interaction may cause an atomic scale contact of the mask and a surface of a polymer without any external force. These steps may make an optical alignment in a vertical direction with a nano-scale accuracy. A light through the mask may create a 3-dimensional intensity distribution exposing the photopolymer film throughout an entire thickness. This intensity distribution may be created by a spatial overlap of beams generated by refraction near a surface of the mask.

The 3-dimensional nanostructure having an intensity distribution geometric structure may be created by removing the phase mask and developing a portion of the polymer that is not cross-linked.

A geometric structure of the phase mask may define the 3-dimensional structure creates therefrom. Critical construction elements of the geometric structure of the phase mask may include a 2-dimensional lattice constant, a duty cycle (dc, i.e., a topographic size), a relief depth (rd), and a shape and a size of a relief topography.

Details of the proximity field nano-patterning technology can be found in, e.g., J. Phys. Chem. B 2007, 111, 12945-12958; Proc. Natl. Acad. Sci. U.S.A. 2004, 101, 12428; AdV. Mater. 2004, 16, 1369; andKorean Patent Publication No.10-2006-0109477 published October 20, 2006.

A 3-dimensional nano-structured porous stretchable polymer material of the present invention may be obtained by transforming a photoresist into a porous polymer having a periodic porous nanostructure pattern using the proximity field nano-pattering technology, filling a liquid-state elastomer between pores of the porous polymer, and then removing the 3-dimensinal porous polymer formed from the photoresist.

The 3-dimensional nano-structured porous stretchable polymer material of the present invention is advantageous in that a 2-dimensional planar cross-section of the stretchable polymer material may be formed in any forms.

A photosensitive material (photoresist) may be formed to have a periodic 3-dimensional porous nanostructure pattern using the proximity field nano-patterning method, and an additional mask may be used to overlap the phase mask so that the 2-dimensional planar cross-section may be formed as a shape corresponding to a shape of the additional mask. Alternatively, the photoresist may be formed to have the periodic 3-dimensional porous nanostructure pattern using the proximity field nano-patterning method, and then the any forms of the 2-dimensional planar cross-section may be obtained by an additional patterning process.

The 3-dimensional nano-structured porous stretchable polymer material may be selected from poly(dimetylsiloxane)(PDMS), polyurethane acrylate (PUA), perfluoropolyether (PFPE) and polyester (PE), and a thickness of the 3-dimensional nano-structured porous stretchable polymer may range from about 1 micrometer to about 10 millimeters. When the thickness becomes lower than a micro-scale, stretchability and flexibility of most materials may be increased. However, the stretchability and flexibility may be decreased at an extremely thin thickness less than a specific critical point.

The 3-dimensional nano-structured porous stretchable polymer material may have a property selected from that of a conductive material, a magnetic material and a semiconductor material. In this case, the conductive material, the magnetic material and the semiconductor material may be dispersed into a photopolymerizable polymer that is an elastomer so that the 3-dimensional nano-structured porous stretchable polymer material may have the property of the conductive material, the magnetic material or the semiconductor material.

Further, the conductive material, the magnetic material or the semiconductor material may be introduced into a porous channel of 3-dimensional nano-structured porous stretchable polymer material so that the 3-dimensional nano-structured porous stretchable polymer material may have the property of the conductive material, the magnetic material or the semiconductor material.

For example, in a fabrication of a conductive 3-dimensional nano-structured porous stretchable polymer material, a carbon nanotube, at least one type of a metal nanoparticle or a mixture of the metal nanoparticles, or at least one type of a metal oxide nanoparticle may be dispersed in a polymer material or may be introduced into the channel of the porous stretchable polymer material.

In this case, a liquid-state conductive material may be infiltrated and dispersed in a porous channel of the 3-dimensional nano-structured porous polymer material so that the porous stretchable polymer material of the present invention may have the property of the conductive material.

According to the present invention, a periodicity, an arrangement and a wavelength of an incidence light of the phase mask utilized in the proximity field nano-patterning technology may be controlled to adjust a size and a periodicity of the pore in the 3-dimensional nano-structured porous stretchable polymer material.

The present invention may provide a fabrication method of the 3-dimensional nano-structured porous stretchable polymer material including the following steps.

(a) spin coating a photoresist on a substrate and thermally vaporizing a solvent;

(b) forming a periodic 3-dimensional porous nanostructure pattern in the photoresist by a proximity field nano-patterning method;

(c) impregnating a liquid-state elastomer between pores using the photoresist including the periodic 3-dimensional porous nanostructure pattern as a template;

(d) removing the template by an organic solvent to obtain a 3-dimensional nano-structured porous stretchable polymer material that has a inverse form of the 3-dimensional porous nanostructure pattern in the photoresist;

(e)separating the porous stretchable polymer material from the organic solvent and performing a drying process.

The photoresist used in the step (a) may include a photosensitive material that is photo-polymerized when absorbing an electromagnetic radiation such as a photo-polymerization precursor, wherein the photosensitive material is chemically and/or physically modified by an exposure to the electromagnetic radiation, so that the material may be chemically etched or may not be chemically etched, or the material may become soluble or insoluble to a chemical reagent such as a solvent.For example, the photoresist may include various photo-crosslinkable materials such as a DNQ-based positive tone resist, an epoxy-based negative tone resist, a phenolic resin, an organic-inorganic hybrid, a hydrogel, etc.

As stated above, the proximity field nano-patterning method of the step (b) may be easily carried out with reference to, e.g., J. Phys. Chem. B 2007, 111, 12945-12958; Proc. Natl. Acad. Sci. U.S.A. 2004, 101, 12428; AdV. Mater. 2004, 16, 1369; andKorean Patent Publication No.10-2006-0109477 published October 20, 2006. For example, the proximity field nano-patterning method may include the following steps.

1) Providing a substantial coherence electromagnetic radiation beam; 2) Radiating the substantial coherence electromagnetic radiation beam on a mask element that forms a conformal contact with a photosensitive material, wherein the mask element creates a plurality of electromagnetic radiation beams thereby to form an optical interference pattern in the photosensitive material, and an interaction between the electromagnetic radiation and the photosensitive material forms a chemically modified region in the photosensitive material; and3) Removing at least a portion of the chemically modified region in the photoresist material or at least a portion of the photosensitive material that is not chemically modified to form a 3-dimensional nanostructure.

The exemplary phase mask used in the proximity field nano-patterning method may include poly(dimetylsiloxane)(PDMS), polyurethane acrylate (PUA) or perfluoropolyether (PFPE), and may be prepared in a low cost by a soft lithography casting and a curing process.

According to the present invention, in the step (b), an additional mask may be used to overlap the phase mask used in the proximity field nano-patterning method, and thus a 2-dimensional planar cross-section of the obtained 3-dimensional nano-structured porous stretchable polymer material may be formed as a shape corresponding to a shape of the additional mask.

Further, in the step (b), after the step of forming the photoresist to have the periodic 3-dimensional porous nanostructure pattern using the proximity field nano-patterning method, an additional patterning process may be performed so that the 2-dimensional planar cross-section of the obtained 3-dimensional nano-structured porous stretchable polymer material may be formed in any forms.

The liquid-state elastomer used in the step (c) may include poly(dimetylsiloxane)(PDMS), polyurethane acrylate (PUA), perfluoropolyether (PFPE) orpolyester (PE), etc.

The liquid-state elastomer used in the step (c) may further include at least one of a conductive material, a magnetic material or a semiconductor material to provide an additional functionality.

If the liquid-state elastomer further includes a conductive material, the conductive material may be selected from a carbon nanotube, at least one type of a metal nanoparticle or a mixture of the metal nanoparticles, and at least one type of a metal oxide nanoparticle.

To provide the functionality, the conductive material, the magnetic material or the semiconductor material may be introduced into a porous channel of the finally obtained 3-dimensional nano-structured porous stretchable polymer material. Thus, conductive, semiconductor or magnetic functionalities may be provided.

For example, in a fabrication of a conductive 3-dimensional nano-structured porous stretchable polymer material, the carbon nanotube, at least one type of the metal nanoparticle or the mixture of the metal nanoparticles, or at least one type of the metal oxide nanoparticle may be introduced into the channel of the finally obtained porous stretchable polymer material.

The organic solvent used in the step (d) may include ethanol, PGMEA, NMP, acetone, a photoresist developing solution, etc.

In the step (a), the present invention may further include forming a sacrificial layer between the photoresist and the substrate, and the sacrificial layer and the substrate may be separated from each other in the step (d).

The sacrificial layer may be interposed so that the 3-dimensional nano-structured porous stretchable polymer material may be easily detached from the substrate when removing the template. The sacrificial layer may be formed using a polymer material soluble to the organic solvent, usually a photoresist strongly thermal-treated at a temperature greater than a soft-baking temperature.

In the fabrication method of the present invention, a thickness of the photoresist may range from about 1 micrometer to about 10 millimeters. The thickness of the photoresist may have an effect on a mechanical property of the finally obtained 3-dimensional nano-structured polymer material. When the thickness becomes lower than a micro-scale, stretchability and flexibility of most materials may be increased. However, the stretchability and flexibility may be decreased at an extremely thin thickness less than a specific critical point.

In the fabrication method of the present invention, a transmitting thickness of a 3-dimensional interference field used in the proximity field nano-patterning may be adjusted by controlling an exposure time or an exposure amount of the photoresist.

In the fabrication method of the present invention, a size and a periodicity of pores in the 3-dimensional nanostructure may be controlled by adjusting a periodicity and an arrangement of the phase mask used in the proximity field nano-patterning, and a wavelength of an incidence light.

The present invention may further provide an electronic material including the 3-dimensional nano-structured porous stretchable polymer material.

The present invention may further include a stretchable conductor including the 3-dimensional nano-structured porous polymer material. In the 3-dimensional nano-structured porous polymer material, nano-size pores ranging from about 1 to about 2,000 nm having regular or irregular shapes in an axis direction thereof may be connected or partially connected to each other to form a channel. The nano-size pores and the porous nanostructure may form a periodic 3-dimensional porous nanostructure pattern. The 3-dimensional nano-structured porous stretchable polymer material may be highly stretchable beyond a stretch limit of a polymer bulk material through a stress dispersion effect by the 3-dimensional porous nanostructure pattern.

The stretchable conductor including the 3-dimensional nano-structured porous polymer material may include a photopolymerizable polymer. At least one selected from a carbon nanotube, at least one type of a metal nanoparticle or a mixture of metal nanoparticles and at least one type of a metal oxide nanoparticle may be dispersed or introduced in a porous channel of the 3-dimensional nano-structured porous polymer material.

Further, a liquid-state conductive material may be infiltrated and dispersed in the porous channel of the 3-dimensional nano-structured porous polymer material so that the 3-dimensional nano-structured porous stretchable polymer material of the present invention may have the property of the conductive material.

The present invention may further include a stretchable magnetic material including the 3-dimensional nano-structured porous polymer material. In the 3-dimensional nano-structured porous polymer material, nano-size pores ranging from about 1 to about 2,000 nm having regular or irregular shapes in an axis direction thereof may be connected or partially connected to each other to form a channel. The nano-size pores and the porous nanostructure may form a periodic 3-dimensional porous nanostructure pattern. The 3-dimensional nano-structured porous stretchable polymer material may be highly stretchable beyond a stretch limit of a polymer bulk material through a stress dispersion effect by the 3-dimensional porous nanostructure pattern.

The 3-dimensional nano-structured porous stretchable magnetic material may include a photopolymerizable polymer. The magnetic material may be dispersed or introduced in a porous channel of the 3-dimensional nano-structured porous polymer material.

Hereinafter, the present invention will be described in more detail with reference to examples. However, the present invention is not to be construed as limited by the examples.

FIG. 5 is a schematic view illustrating a fabrication method of a 3-dimensional nano-structured highly stretchable material beyond an intrinsic stretch limit in accordance with example embodiments.

First, referring to section (a) of FIG. 5, a sacrificial layer 15 may be coated on a substrate 10. The sacrificial layer used herein may be formed using a polymer material soluble in an organic solvent, usually a strongly thermal-treated photoresist at a temperature greater than a soft-baking temperature. For example, a DNQ-based positive tone photoresist may be used, and may be thermally treated using a hot plate at a temperature of not less than about 110 °C for more than about 5 minutes to form the sacrificial layer 15.

The substrate 10 is an assisting member for a formation of a photoresist layer. A material for the substrate 10 is not specifically limited, however, a material having a small reflectivity to an ultraviolet light and having an endurance to the organic solvent for removing a polymer template may be preferable. A glass substrate such as a cover glass or a slide glass that may be available in a low cost may be used for the substrate 10. If a material having a high reflectivity is used for the substrate 10, an anti-reflection layer may be formed as a bottom layer.

A liquid-state photoresist 20 may be spin-coated on the dried sacrificial layer 15 to form a uniform thin layer, and a soft-baking process may be performed using a hot plate at 100 °C for 5 minutes. A DNQ-based positive tone photoresist may be used for the photoresist 20. A photo-crosslinkable material such as an organic-inorganic hybrid, a hydrogel, a phenolic resin, etc., may be also used.

Referring to section (b) of FIG. 5, the photoresist may be transformed into a porous polymer having a periodic 3-dimensional porous nanostructure pattern by a proximity field nano-patterning technology.

A phase mask used herein may include PDMS, PUA, PFPE, PE, etc., and a surface structure may include variables such as various periodicity, an arrangement, a stepped portion, etc.

The phase mask may be manufactured from a silicon master. More particularly, the photoresist may be spin-coated on an 8-inch wafer including an anti-reflection layer coating, and exposure and developing processes may be performed to prepare the silicon master for a formation of a desired pattern.

The silicon master may be treated with a perfluorinatedtrichlorosilane vapor to prevent a fixation of the silicon master and a silicon elastomer mask in a subsequent mask manufacture process.

For a formation of an elastomer phase mask corresponding to the master, a double-layered PDMS was used. A PDMS having a high tensile strength (-10 Mpa) was spin-coated on the master for 30 seconds at 1,000 rpm. Further, a spinning was performed at 500 rpm for 30 minutes to form a PDMS layer of the high tensile strength that had a planar surface and partially crosslinked. Subsequently, a PDMS having a relatively low tensile strength (∼ 2 Mpa) was coated on the previously formed PDMS. The two layers were sufficiently cured for a day at a room temperature, and separated from the master to obtain the mask.

Exemplary processes for forming a 3-dimensional porous nanostructure pattern on the photoresist are as follows. An oxygen plasma treatment may be performed on a glass substrate, and then a positive tone photoresist (AZ 9260, Clariant) may be pre-coated on the substrate within a thickness of 5 µm in order to form a sacrificial layer. The sacrificial layer may be treated by a hard baking process at about 110 °C for about 5 minutes, and then a positive tone photoresist having a thickness of about 12µm may be spin-coated on the sacrificial layer at 2,000 rpm for 30 seconds.

The substrate on which the photoresist is coated thereon may be treated by a soft baking process at about 100°C for about 5 minutes to obtain a substrate including a desired photoresist.

The photoresist on the substrate may be transformed into a porous polymer including a periodic 3-dimensional porous nanostructure pattern by a proximity field nano-patterning technology.

A phase mask 25 having a stepped structure on a surface thereof that may be prepared as described above may make an atomic scaled conformal contact with the positive tone photoresist coated on the substrate. An ultraviolet laser 30 collimated over the phase mask may be irradiated vertically.

An amount of the irradiation may range from about 50 to about 450 mJ/cm². In this case, an incidence light may form a periodic 3-dimensional distribution in the photoresist 20 by constructive and destructive interferences of the incidence light due to the stepped structure of the phase mask 25.

Referring to section (c) of FIG. 5, when the positive tone photoresist is used, the exposed photoresist 20 may be immersed in a KOH-based developer solution so that an exposed portion may be dissolved and a non-exposed portion may remain. Thus, a photoresist 35 including the 3-dimensional porous nanostructure pattern may be achieved after a drying process in an atmosphere.

Referring to section (d) of FIG. 5, the 3-dimensional nano-structured photoresist 35 may be used as a template, and a liquid-state elastomer 40 may be impregnated. The liquid elastomer 40 may be poured onto the template 35, and an upper surface may be planarized by a post-treatment such as a spin coating. A vacuum state may be maintained by a desicator, a vacuum pump, etc., to fully impregnate nanopores.

The liquid-state elastomer 40 capable of impregnating may include PDMS, PUA, PFPE, PE, etc. A conductive nanoparticle, a carbon nanotube, a magnetic nanoparticle, a semiconductor material, etc., may be added to the liquid-state elastomer, as necessary, to provide a functionality.

The impregnated liquid-state elastomer may form a solid-state thin layer by a post-treatment using a heat, a ultraviolet light, etc., according to types thereof and process conditions.

According to the present invention, the PDMS having a low tensile strength (∼2 Mpa) used for the mask was utilized for the liquid-state elastomer, the curing process was performed at 60°C for 2 hours.

Referring to section (e) of FIG. 5, when the 3-dimensional template impregnated in the elastomer is put in an organic solvent 45, the sacrificial layer based on the photoresist and the template may be simultaneously removed, and a 3-dimensional porous elastomer 50 of an inverse phase may be floated on the organic solvent. The organic solvent may include acetone, ethanol,NMP, PGMEA, KOH and other developer solutions.

Referring to section (f) of FIG. 5, the elastomer floated on the organic solvent may be collected and dried in an atmosphere to obtain a 3-dimensional porous nano-structured elastomer.

A spin-dryer, a supercritical dryer, etc., may be used for preventing a destruction of the nanostructure during the drying process.

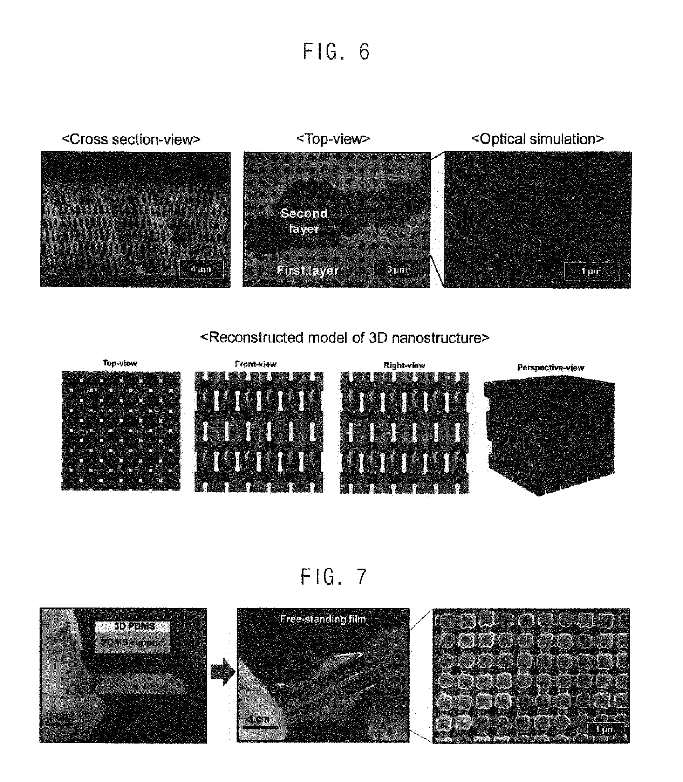

FIG. 6 includes SEM images showing a 3-dimensional nano-structure of a positive tone photoresist obtained by a proximityfieldnano-patterning technology, and simulation results from a top-plan view, a frond view and a side-view of the 3-dimensional nano-structured material.

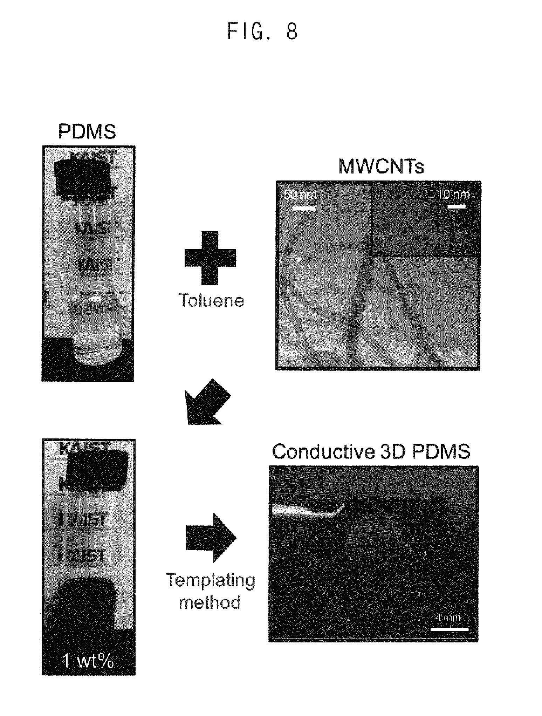

FIG. 7 includes a image and an SEM image showing PDMS having 3-dimensional porous nanostructure pattern, in which PDMS that is a silicon-based elastomer as an impregnating material is used, and a 3-dimensional porous network structure is formed after removing a template. More particularly, it can be acknowledged that an intrinsic transparent color was turned into a grey color due to a scattering by the complex 3-dimensional nanostructure formed in the PDMS thin layer. This can be also acknowledged in examples of FIG. 8 in which a carbon nanotube complex was impregnated in the elastomer to provide a conductive functionality.

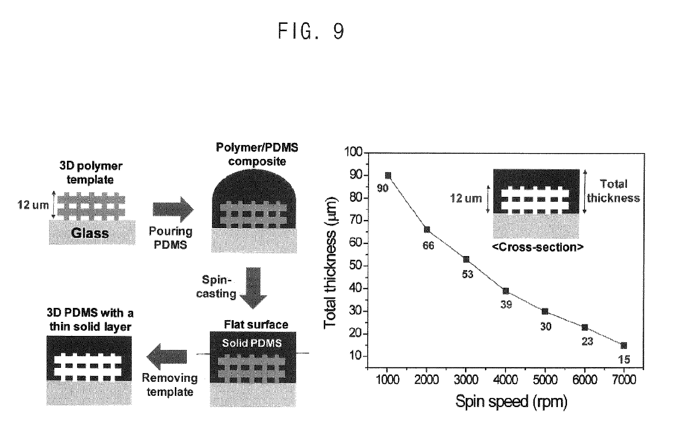

FIG. 8 illustrates a preparation process of a 3-dimensional conductive PDMS formed by an impregnation. FIG. 9 shows that a 3-dimensional nano-structured conductive carbon nanotube complex can be obtained by impregnating PDMS in which a multi-wall carbon nanotube (MWCNT) is dispersed in order to provide a periodic 3-dimensional porous nanostructure pattern PDMS with a conductive functionality.

In impregnating PDMS using the photoresist of the 3-dimensional porous nanostructure pattern as a template, a thickness of the photoresist template having the 3-dimensional porous nanostructure pattern was fixed to 12 µm, and PDMS was impregnated. A liquid-state PDMS was poured on the template and spin-coated to planarize an upper surface for a tensile strength test.

FIG. 9 is a graph showing a preparation process of the 3-dimensional nanostructured PDMS in the present invention, and a thickness of a PDMS thin layer according to a spin rate of a spin coating process. As the spin rate became increased, the thickness of the thin layer was decreased. A thickness of an upper remaining layer was only decreased because the thickness of the template was fixed to 12 µm. That is, a ratio of a 3-dimensionally nano-structured portion in the thin layer was changed according to various spin rates, and thus a tensile strain transformation property may be changed.

To confirm a stretchable property of the 3-dimensional nano-structured stretchable material of the present invention, the 3-dimensional nano-structured PDMS of the present invention was compared to a solid PDMS conventionally used. Additionally, a relative ratio of a 3-dimensionally structured region in the 3-dimensional nano-structured PDMS was changed to analyze the effect of the 3-dimensional structure on an enhancement of the stretchable property.

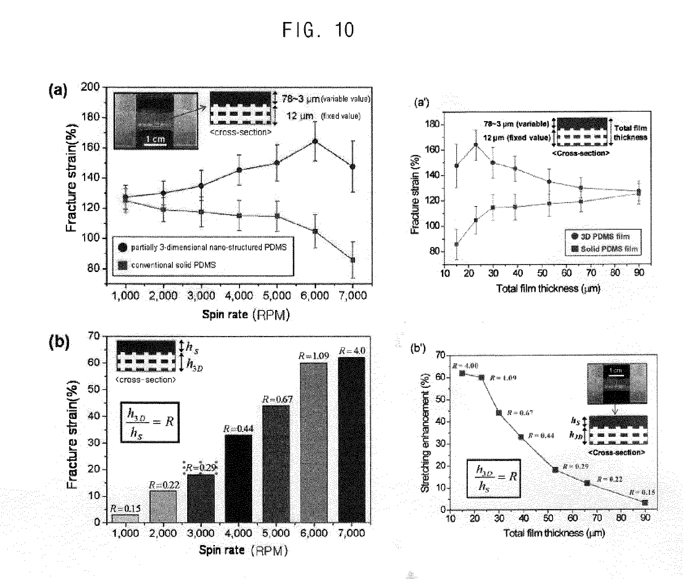

FIG. 10 includes graphs showing tensile failure transformation ratios of a 3-dimensional nano-structured PDMS and a conventional solid PDMS (sections (a) and (a')), and graphs showing enhancement degrees of tensile failure transformation ratios in a 3-dimensional nano-structured PDMS and a conventional solid PDMS (sections (b) and (b')). A tensile failure transformation ratio was measured using a compatibilizedmicrorod tester system (UNITECH).

Referring to sections (a) and (a') of FIG. 10, the 3-dimensional nano-structured PDMS had a tensile failure transformation ratio greater than that of the conventional solid PDMS at the same thickness (the same spin rate). An enhancement degree became larger as a total thickness of the thin layer became decreased, that is, the spin rate became faster. This can be acknowledged by sections (b) and (b') of FIG. 10 which show that as a ratio of the 3-dimensional nano-structured region to a remaining layer formed of the solid PDMS (indicated as "R") became greater, the enhancement degree of the tensile transformation rate was increased.When R reached about 4, the tensile transformation ratio was enhanced by a maximum 62% relative to the conventional PDMS. Thus, in can be concluded that the 3-dimensional nano-structured region have a great contribution to the enhancement of the stretchable property of the material.

Further, a tensile failure transformation ratio according to a curing temperature was measured in order to optimize a curing condition for maximizing a stretchable property of the PDMS material.

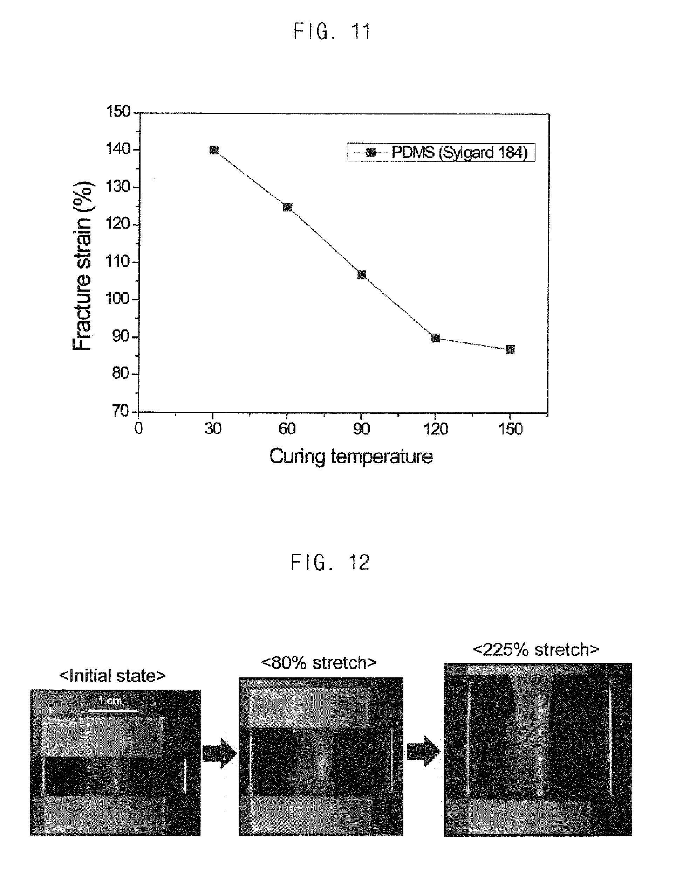

FIG. 11 is a graph showing a tensile strain transformation ratio of a conventional bulk solid PDMS according to a curing temperature.More particularly, in the conventional solid PDMS thin layer, as the curing temperature became decreased, flexible and stretchable properties were increased. This trend is material-originated and thus may be applied in the same manner to the 3-dimentional nano-structured PDMS. Thus, the 3-dimensional nano-structured PDMS may become more flexible and stretchable while lowering the curing temperature.

FIG. 12 includes images showing tensile strained forms of a 3-dimensional nano-structured PDMS cured at a room temperature. Referring to FIG.12, an elongation percentage can be enhanced up to 225% by forming a 3-dimensional nanostructure when PDMS is cured at a room temperature.

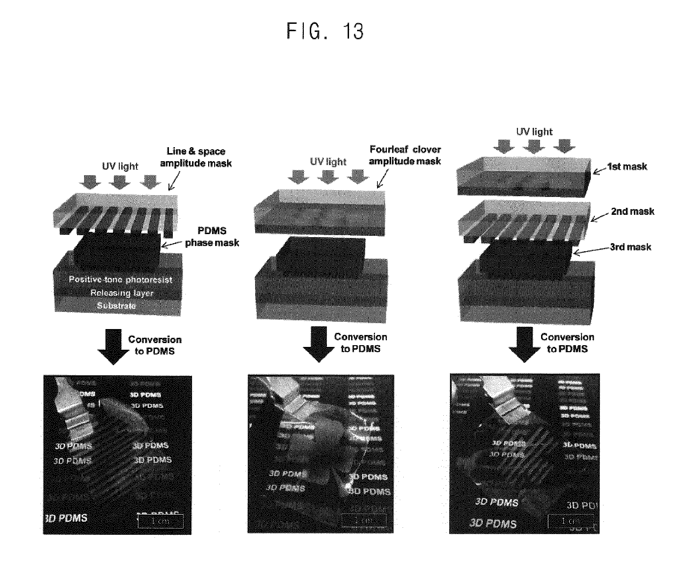

FIG. 13 includes a schematic view of a preparation method of a 3-dimensional nano-structured highly stretchable material of which a 2-dimensional cross-section may have any form, and images of the highly stretchable material prepared therefrom in accordance with other example embodiments.

In a process of forming a photoresist to have a periodic porous nanostructure pattern using the proximity field nano-patterning method, at least one additional mask may be used to overlap the phase mask so that the nanostructure pattern of the photoresist may be formed to have a 2-dimensional planar cross-section corresponding to a shape of the additional mask. This may have an effect on a 2-dimensional planar cross-section of the final 3-dimensional nano-structured porous stretchable polymer material.

That is, the 3-dimensional structure of the 3-dimensional nano-structured porous stretchable polymer material may not be limited to only a bulk structure, and any desired geometric pattern shape may be obtained.

For example, if a line pattern mask is used to be superimposed over the phase mask, the 2-dimensional cross-section of the finally obtained 3-dimensional nano-structured porous stretchable polymer material may be determined to reflect the shape of the line pattern mask.

When a clover pattern mask is used to be superimposed over the phase mask, a corresponding 2-dimensional cross-section may be created. When two masks overlap the phase mask, i.e., the line pattern mask and the clover pattern mask are used to overlap each other, the 2-dimensional cross-section of the finally obtained 3-dimensional nano-structured porous stretchable polymer material may be formed to have a shape corresponding to a shape of each mask.

Further, the 2-dimensional cross-section may be formed in any forms by forming a photoresist to have a periodic 3-dimensional porous nanostructure pattern, and then additionally patterning the photoresist. This process is not illustrated in FIG. 13.

According to the methods described above, the 2-dimensional cross-section of the 3-dimensional nano-structured porous stretchable polymer material may be formed to have a desired geometric shape. In the case that the stretchable material is a conductive elastomer, the stretchable material may be utilized for an interconnection, a wire, etc., of an electronic device.

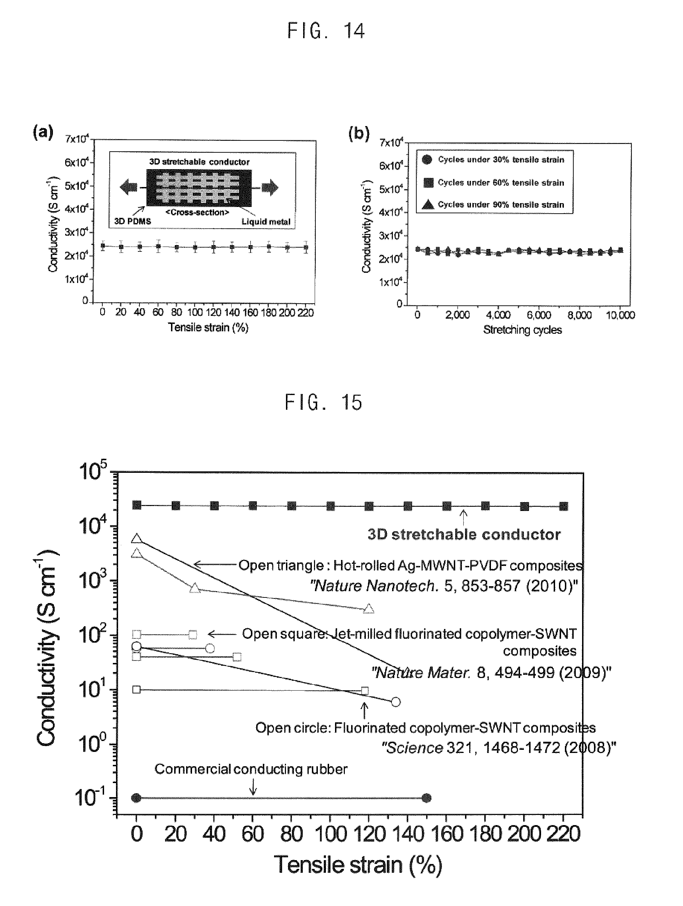

FIG. 14 includes a graph showing a conductivity change according to a tensile strain of a stretchable conductor using the 3-dimensional nano-structured highly stretchable material of the present invention (section (a)), and a graph showing a conductivity change according to the number of repeated stretch cycles of the stretchable conductor using the 3-dimensional nano-structured highly stretchable material of the present invention

The stretchable conductor used in FIG. 14 may be obtained by introducing a liquid-state conductor at a room temperature, eutectic gallium-indium alloy(EGaIn), between pores present in the 3-dimensional nano-structured PDMS as follows:

First, the liquid-state EGaIn may be dropped on a surface of a partially 3-dimensional nano-structured PDMS having a solid thin supporting layer at an opposite face, and then an external pressure may be provided using a PDMS dummy block to infiltrate the EGaIn between the pores present in the 3-dimensional nano-structured PDMS. The specimen may be loaded in a chamber and vacuumed so that the EGaIn may be infiltrated between the pores present in the 3-dimensional nano-structured PDMS without any vacancy. Remaining EGaIn on the surface of the 3-dimensional nano-structured PDMS may be removed by a rapid spin coating process. The above process may be repeated several times to ensure the infiltration of the EGaIn into a 3-dimensional porous channel. Two specimens obtained by the above process may be sandwiched and encapsulated such that the 3-dimensional nano-structured PDMS surfaces may face each other, thereby to prepare a highly stretchable conductor using the 3-dimensional nanostructure.

As illustrated in FIG. 14, the liquid-state conductor included in a thin layer of the 3-dimensional nano-structured highly stretchable conductor may flow conformably according to a tensile strain transformation, so that an electrical path may be maintained without a percolation breakdown and thus a electrical conductivity may not be reduced. It was also acknowledged that the 3-dimensional nano-structured highly stretchable conductor showed no reduction of the electrical conductivity even through a repeated stretching-releasing test, and thus has a mechanically robust property.

FIG. 15 is a graph showing conductivity changes according to tensile strains of the 3-dimensional nano-structured highly stretchable conductor using EGaInof the present invention and a conventional stretchable conductor complex. As illustrated in FIG. 15, the conventional stretchable conductor complex which is a composite prepared by introducing a conductive filler such as a relatively stiff carbon nanotube or a metal nanoparticle in a stretchable matrix has a reduction of the electrical conductivity due to an electrical percolation breakdown between the conductive fillers according to a tensile strain transformation. However, the highly stretchable conductor of the present invention includes the liquid-state conductor, and thus the electrical conductivity is maintained even at a great tensile strain transformation.

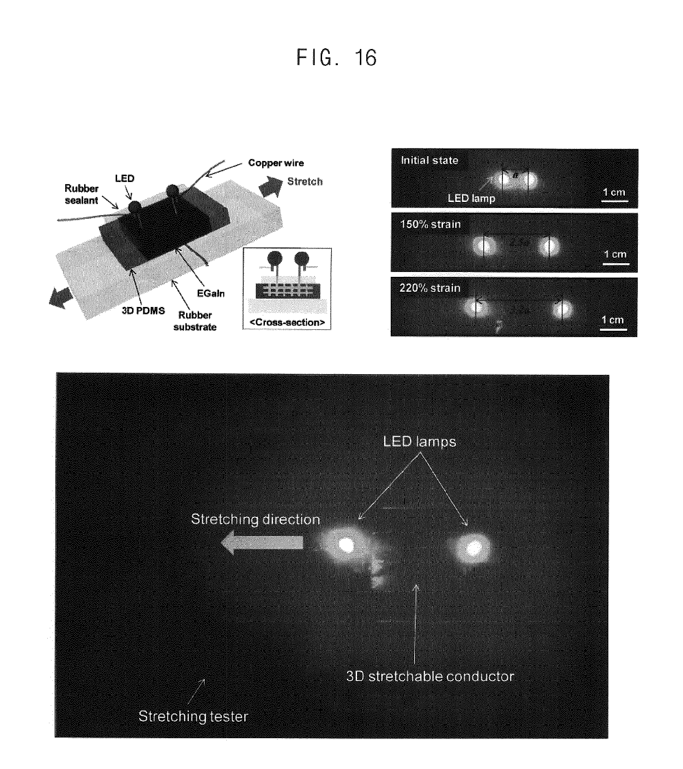

FIG. 16 illustrates a stretchable LED device manufactured using the 3-dimensional nano-structured highly stretchable conductor. As illustrated in FIG. 16, the LED shows an acceptable light emission because the highly stretchable conductor of the present invention has no reduction of the electrical conductivity even though the highly stretchable conductor is elongated to 150 %, even to 220% of an initial size.

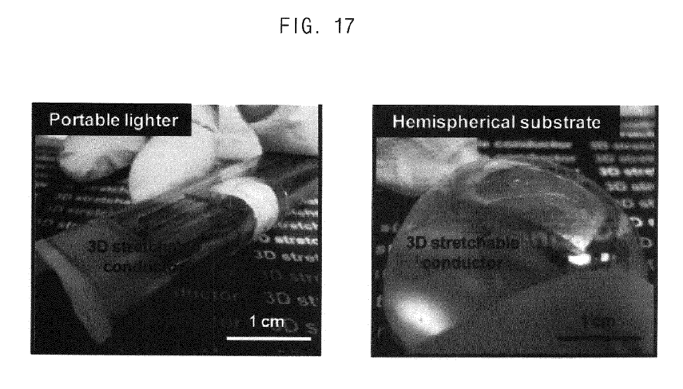

FIG. 17 includes images showing other application examples of the present invention. As illustrated in FIG. 17, a 3-dimensional nano-structured highly stretchable conductor thin layer may be attached conformably on a non-planar substrate and successfully operated. Thus, this may be applied to a next-generation stretchable and flexible device such as a wearable computer or flexible display capable of being attached to a human body as an accessory.

The 3-dimensional nano-structured porous stretchable polymer material obtained by the proximity field nano-patterning technology may provide a stretchable material in which a stretchable property beyond a stretch limit of a bulk material is achieved through a stress dispersion effect by the 3-dimensional porous nanostructure pattern.

Particularly, when a PDMS based on silicon is 3-dimensionallu nano-structured, a conventional tensile strain transformation limit may be enhanced up to 62 %, and may be further expanded through a structural optimization.

Therefore, the 3-dimensional nano-structured highly stretchable material prepared by the present invention may be utilized as a basic technology of an enhanced stretchable electronic device.

Further, the 3-dimensional nano-structured porous stretchable conductor or magnetic material may be applied to a conductive or magnetic electronic material field in order to provide a highly stretchable property.

The foregoing is illustrative of example embodiments and is not to be construed as limiting thereof. Although a few example embodiments have been described, those skilled in the art will readily appreciate that many modifications are possible in the example embodiments without materially departing from the novel teachings and advantages of the present inventive concept. Accordingly, all such modifications are intended to be included within the scope of the present inventive concept as defined in the claims. Therefore, it is to be understood that the foregoing is illustrative of various example embodiments and is not to be construed as limited to the specific example embodiments disclosed, and that modifications to the disclosed example embodiments, as well as other example embodiments, are intended to be included within the scope of the appended claims.

## Claims

1. A3-dimensional nano-structured porous stretchable polymer material, comprising:
nano-size pores having regular or irregular shapes in an axis direction thereof in a polymer material having a porous 3-dimensional nanostructure, the nano-size pores being3-dimensionally connected or partially connected to each other to form a channel; and
aperiodic 3-dimensional porous nanostructure pattern formed by the nano-size pores and the material having the porous nanostructure,
wherein a stretchable property beyond a stretch limit of a bulk material is achieved through a stress dispersion effect by the 3-dimensional porous nanostructure pattern.

2. The polymer materialof claim 1, wherein the 3-dimensional nano-structured porous stretchable polymer material has a property selected from those of a conductive material, a magnetic material and a semiconductor material.

3. The polymer material of claim 2,wherein the conductive material, the semiconductor material or the magnetic material is dispersed in a photopolymerizable polymer that is an elastomer, or the conductive material, the semiconductor material or the magnetic material is introduced in a porous channel of the 3-dimensional nano-structured porous stretchable polymer material.

4. The polymer material of claim 3,wherein the conductive material is selected from a carbon nanotube, at least one type of a metal nanoparticle or a mixture of metal nanoparticles, or at least one type of a metal oxide nanoparticle.

5. The polymer material of claim 1,wherein the 3-dimensional nano-structured porous stretchable polymer material is obtained by forming the 3-dimensional porous nanostructure pattern from a photopolymerizable polymer that is a photoresist using a proximity field nano-patterning.

6. The polymer material of claim 5,wherein a size and a periodicity of pores in the 3-dimensional nano-structured porous stretchable polymer is controlled by adjusting a periodicity and an arrangement of a phase mask, and a wavelength of an incidence light used in the proximity field nano-patterning.

7. The polymer material of claim 5,wherein the 3-dimensional nano-structured porous stretchable polymer material is obtained by transforming the photoresist into a porous polymer having the periodic 3-dimensional porous nanostructure pattern through the proximity field nano-patterning, filling a liquid-state elastomer between pores of the porous polymer, and removing a 3-dimensional porous polymer by the photoresist.

8. The polymer material of claim 1,wherein a 2-dimensional planar cross-section of the 3-dimensional nano-structured porous stretchable polymer material is formed in any shape.

9. The polymer material of claim 8,wherein the 2-dimensional planar cross-section is formed by using at least one additional mask overlapping a phase mask so that the 2-dimensional planar cross-section is formed as a shape corresponding to a shape of the additional mask while forming a photoresist to have the periodic 3-dimensional porous nanostructure pattern using a proximity field nano-patterning method, or by forming a photoresist to have the periodic 3-dimensional porous nanostructure pattern using a proximity field nano-patterning method, and then performing an additional patterning process.

10. The polymer material of claim 1,wherein the 3-dimensional nano-structured porous stretchable polymer material includes any one selected from poly(dimetylsiloxane) (PDMS), polyurethane acrylate (PUA), perfluoropolyether (PFPE), and polyester (PE).

11. A fabrication method of a 3-dimensional nano-structured porous stretchable polymer material, comprising:
(a) spin coating a photoresist on a substrate and thermally vaporizing a solvent;
(b) forming a periodic 3-dimensional porous nanostructure pattern from the photoresist by a proximity field nano-patterning method;
(c) impregnating a liquid-state elastomer between pores using the photoresist including the periodic 3-dimensional porous nanostructure pattern as a template;
(d) removing the template by an organic solvent to obtain a 3-dimensional nano-structured porous stretchable polymer material that has a inverse form of the 3-dimensional porous nanostructure pattern formed in the photoresist; and
(e) separating the porous stretchable polymer material from the organic solvent and performing a drying process.

12. The method of claim 11, wherein the liquid-state elastomerincludes any one selected from poly(dimetylsiloxane) (PDMS), polyurethane acrylate (PUA), perfluoropolyether (PFPE) and polyester (PE).

13. The method of claim 11, wherein a size and a periodicity of pores is controlled by adjusting a periodicity and an arrangement of a phase mask, and a wavelength of an incidence light used in the proximity field nano-patterning method.

14. The method of claim 11, wherein a transmitting thickness of a 3-dimensional interference field used in the proximity field nano-patterning method is adjusted by controlling an exposure time or an exposure amount of the photoresist.

15. The method of claim 11, further comprising, in the step (a), forming a sacrificial layer between the photoresist and the substrate,
wherein the sacrificial layer and the substrate are separated from each other in the step (d).

16. The method of claim 11, wherein the organic solvent includes any one selected from ethanol, PGMEA, NMP, acetone and a photoresist developer solution.

17. The method of claim 11, wherein the liquid-state elastomer further includes a conductive material, a magnetic material or a semiconductor material for providing at least one functionality thereof.

18. The method of claim 17, wherein the conductive material is selected from a carbon nanotube, at least one type of a metal nanoparticle or a mixture of metal nanoparticles, or at least one type of a metal oxide nanoparticle.

19. The method of claim 11, wherein, in the step (a), an additional mask is used to overlap a phase mask used in the proximity field nano-patterning so that a 2-dimensional planar cross-section of the obtained 3-dimensional nano-structured porous stretchable polymer material is formed as a shape corresponding to a shape of the additional mask

20. The method of claim 11, wherein, in the step (b), after forming the photoresist to have the periodic 3-dimensional porous nanostructure pattern using the proximity field nano-patterning method, an additional patterning process is performed on the photoresist so that a 2-dimensional planar cross-section of the obtained 3-dimensional nano-structured porous stretchable polymer material is formed as any shape.

21. The polymer material of claim 3, wherein a liquid-state conductive material is infiltrated and dispersed in a porous channel of the 3-dimensional nano-structured porous polymer material to provide a conductive property.

22. A stretchable conductor including a 3-dimensional nano-structured porous polymer material, comprising:
nano-size pores having regular or irregular shapes in an axis direction thereof in a polymer material having a porous 3-dimensional nanostructure, the nano-size pores being3-dimensionally connected or partially connected to each other to form a channel; and
aperiodic 3-dimensional porous nanostructure pattern formed by the nano-size pores and the material having the porous nanostructure,
wherein a stretchable property beyond a stretch limit of a bulk material is achieved through a stress dispersion effect by the 3-dimensional porous nanostructure pattern.

23. The stretchable conductor of claim 22, wherein the stretchable conductor including the 3-dimensional nano-structured porous polymer material includes a photopolymerizable polymer, and
any material selected from a carbon nanotube, at least one type of a metal nanoparticle or a mixture of metal nanoparticles, and at least one type of a metal oxide nanoparticle is dispersed in the photopolymerizable polymer or introduced in a porous channel of the 3-dimensional nano-structured porous polymer material.

24. The stretchable conductor of claim 22, wherein a liquid-state conductive material is infiltrated and dispersed in a porous channel of the 3-dimensional nano-structured porous polymer material to provide a conductive property.

25. A stretchable magnetic material including a 3-dimensional nano-structured porous polymer material, comprising a periodic 3-dimensional porous nanostructure pattern formed by nano-size pores and a material having a porous nanostructure,
wherein a stretchable property beyond a stretch limit of a bulk material is achieved through a stress dispersion effect by the 3-dimensional porous nanostructure pattern.

26. The stretchable magnetic material of claim 25, wherein the stretchable magnetic material including the 3-dimensional nano-structured porous polymer material includes a photopolymerizable polymer, and
a magnetic materialis dispersed in the photopolymerizable polymer or introduced in a porous channel of the 3-dimensional nano-structured porous polymer material.
